# EUROPÄISCHE PATENTANMELDUNG

(11) **EP 1 873 890 A2**
(43) Veröffentlichungstag der Anmeldung: **02.01.2008**
(21) Anmeldenummer: 07110535.7
(22) Anmeldetag: 19.06.2007
(51) Int. Cl.: H02K 5/14, H02K 9/06, H02K 13/10, H01R 39/48

(54) **Universalmotor mit Einrichtung zum Entfernen von Staub**

(30) Priorität: 29.06.2006 DE 102006000315
(71) Anmelder: HILTI Aktiengesellschaft, 9494 Schaan (LI)
(72) Erfinder: Braml, Georg, 86899, Landsberg (DE); Fritsch, Frank, 86916, Kaufering (DE); Burger, Helmut, 82272, Moorenweis (DE); Ohlendorf, Oliver, 86899, Landsberg (DE)
(74) Vertreter: Wildi, Roland

(57) **Zusammenfassung**

Ein Universalmotor (2) weist wenigstens zwei Kohlebürsten (36), die jeweils in einem Kommutierungsbereich (34) einen Kommutator (14) kontaktieren, eine Lüftungseinrichtung (12), mittels der ein Kühlstrom (K) in einem Kühlstrompfad (24) erzeugbar ist und einen Staubschutz auf , mittels dem Materialpartikel (M) vom Kommutierungsbereich (34) beabstandbar sind und der wenigstens ein Leitelement (26) aufweist, mittels dem die Materialpartikel (M) dem Kühlstrom (K) zuleitbar sind. Es ist vorgesehen, dass das Leitelement (26) eine zwischen zwei Kohlebürsten (36) angeordnete und dem Kommutator (14) zugewandte glatte, konkave Leitfläche (28) aufweist, die sich benachbart zu einer Oberfläche (30) des Kommutators (14) erstreckt und zu einer Absaugöffnung (22) hin gerichtet ist, die mit dem Kühlstrompfad (24) verbunden ist.

## Beschreibung

Die Erfindung betrifft einen Universalmotor mit wenigstens zwei Kohlebürsten, die jeweils in einem Kommutierungsbereich einen Kommutator elektrisch kontaktieren und einer Lüftungseinrichtung, mittels der ein Kühlstrom in einem Kühlstrompfad erzeugbar ist. Ferner ist ein Staubschutz vorgesehen, mittels dem Materialpartikel, wie Stäube und sonstige insbesondere im Betrieb eines Handwerkzeuggerätes abgetragene Materialteilchen, vom Kommutierungsbereich fern gehalten werden können. Hierzu weist der Staubschutz wenigstens ein Leitelement auf, mittels dem die Materialpartikel dem Kühlstrom zugeleitet werden können.

Bei derartigen Universalmotoren werden die Kommutierungsbereiche durch den Staubschutz vor der erosiven Wirkung der Materialpartikel geschützt und somit die Lebensdauer des Motors verlängert.

Aus der US 6,097,128 ist ein Universalmotor mit zwei Kohlebürsten bekannt, die in einer jeweiligen Bürstenführung gehalten sind. Auf die Bürstenführungen sind Haubenelemente aufgeschoben, die um die Kohlebürsten herum eine teilweise geschlossene Kammer erzeugen. Zum Entfernen von Kohlenstaub, der im Betrieb von den Kohlebürsten abgetragen wird, wird über Strömungsöffnungen der Haubenelemente eine Luftströmung von der Kammer hin zu einem Kühlluftstrom erzeugt, wobei die Luftströmung an Staubfallen vorbei geleitet wird, an dem der Kohlenstaub anhaften kann.

Nachteilig an dem bekannten Universalmotor ist, dass die durch die Haubenelemente gebildeten Leitelemente einen relativ komplexen Aufbau aufweisen und dadurch entsprechend hohe zusätzliche Herstellungskosten verursachen. Zudem sind die hierin vorgesehenen Mittel, insbesondere wegen der hohen Strömungsverluste innerhalb der Leitelemente sowie den sich schnell zusetzenden Staubfallen, nicht zum Entfernen grösserer Mengen von Materialpartikeln aus den Kommutierungsbereichen geeignet, wie sie beispielsweise bei Anwendung eines Handwerkzeuggerätes, wie insbesondere eines Bohr-oder Meisselgerätes, anfallen.

Der vorliegenden Erfindung liegt die Aufgabe zugrunde, bei einem Universalmotor die genannten Nachteile zu vermeiden und bei minimierten Zusatzkosten eine verbesserte Ableitung von Materialpartikeln aus den Kommutierungsbereichen zu erzielen.

Erfindungsgemäss wird die Aufgabe dadurch gelöst, dass das Leitelement eine konkave Leitfläche aufweist, die zwischen zwei in Umfangsrichtung benachbarten Kohlebürsten angeordnet und dem Kommutator zugewandt ist. Dabei ist die Leitfläche wenigstens in Umfangsrichtung mathematisch glatt, im Sinne von knickfrei, und erstreckt sich in radialer Richtung benachbart zu einer Oberfläche des Kommutators, das heisst ohne radial dazwischen liegende sonstige Elemente, zu einer Absaugöffnung hin. Die Absaugöffnung ist dabei mit dem Kühlstrompfad verbunden. Hierbei wird im Betrieb durch die Umfangsgeschwindigkeit des Kommutators die Luftschicht zwischen der Oberfläche des Kommutators und der Leitfläche in tangentialer Richtung, d.h. in Umfangsrichtung beschleunigt. Die in dieser Luftschicht mitgeführten Materialteilchen werden dabei, entsprechend einem Zyklon-Effekt, aufgrund ihrer Trägheit gegen die Leitfläche gedrückt und bewegen sich entlang dieser in Richtung der Absaugöffnung. Auf diese Weise kann durch ein sehr einfaches und kostengünstig herzustellendes Leitelement eine verbesserte Ableitung von Materialpartikeln erzielt werden, die auch bei Verwendung des Universalmotors in einem Handwerkzeuggerät, das im Betrieb teilweise in einer stark staubhaltigen Umgebung verwendet wird, eine lange Lebensdauer gewährleistet.

Vorteilhafterweise erstreckt sich die Leitfläche über einen Winkelbereich von wenigstens 45° der Oberfläche, wodurch eine ausreichende Abscheidewirkung zwischen der Leitfläche und dem Kommutator gewährleistet wird.

In einer besonders bevorzugten Ausführungsform verringert sich der Abstand der Leitfläche zur Oberfläche in Richtung der Absaugöffnung hin. Hierdurch wird ein gewisser Düseneffekt erzielt, durch den sich die Geschwindigkeit der Luftschicht zwischen der Leitfläche und dem Kommutator zur Absaugöffnung hin erhöht und die Abscheidewirkung verbessert wird.

Vorteilhafterweise ist an einer in Umfangsrichtung vom Leitelement abgewandten Seite der Absaugöffnung ein quer stehendes Prallelement vorgesehen, das einen sicheren Eintritt der mit der Luftschicht mitgeführten Materialpartikel in die Absaugöffnung gewährleistet.

Bevorzugterweise ist das Prallelement an einer der Absaugöffnung zugewandten Seite einer Bürstenführung angeordnet. Hierdurch kann die betreffende Kohlebürste sicher gegen die in der oberflächennahen Luftschicht mitgeführten Materialpartikel abgeschirmt werden.

Vorteilhafterweise ist jeder der Kohlebürsten eines der Prallelemente, eine der Absaugöffnungen und eine der Leitflächen zugeordnet, wodurch sämtliche Kommutierungsbereiche wirkungsvoll vor den Materialpartikeln geschützt werden.

Vorteilhafterweise ist das wenigstens eine Prallelement an einem Bürstenhalter gehalten und sind das wenigstens eine Leitelement und die Absaugöffnung an einem Motorgehäuse ausgeformt. Auf diese Weise kann eine exakte Positionierung des Prallelementes gegenüber der betreffenden Kohlebürste und eine exakte Positionierung der Leitfläche gegenüber der Absaugöffnung gewährleistet werden.

In einer besonders vorteilhaften Ausführungsform sind das wenigstens eine Prallelement, das wenigstens eine Leitelement und die Absaugöffnung am Bürstenhalter ausgeformt. Hierdurch ist eine besonders einfache Montage des Staubschutzes gemeinsam mit dem Bürstenträger möglich.

Dabei ist es günstig, wenn jede der Kohlebürsten in Umfangsrichtung an beiden Seiten jeweils das Prallelement, das Leitelement und die Absaugöffnung aufweist. Auf diese Weise kann der Staubschutz auch an einem Universalmotor verwendet werden, bei dem die Drehrichtung umkehrbar ist.

Die Erfindung wird nachstehend anhand eines Ausführungsbeispieles näher erläutert. Es zeigen:
Fig. 1 eine Ansicht eines erfindungsgemässen Universalmotors und
Fig. 2 eine Draufsicht auf einen Staubschutz des Universalmotors in Richtung II aus Fig. 1.

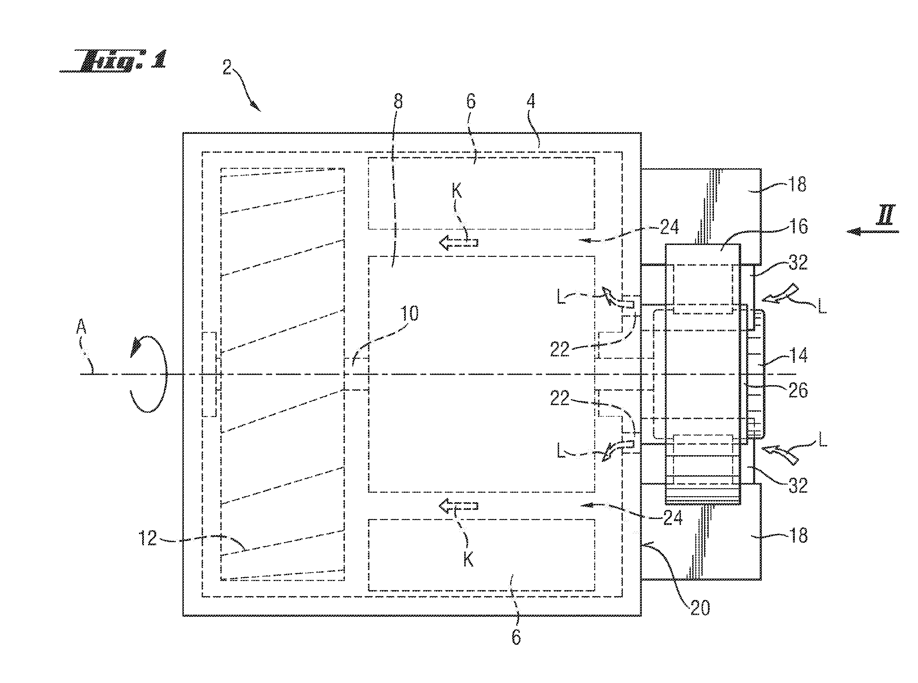

Fig. 1 zeigt einen Universalmotor 2 eines nicht näher dargestellten elektrisch betriebenen Handwerkzeuggerätes, wie beispielsweise einem Bohr- oder Meisselgerät. Der Universalmotor weist ein Motorgehäuse 4 auf, in dem ein Stator 6 sowie ein Rotor 8 und eine mit diesem über eine Motorwelle 10 verbundene Lüftereinrichtung 12 untergebracht sind.

An einem von der Lüftereinrichtung 12 abgewandten, ausserhalb des Motorgehäuses 4 liegenden Ende der Motorwelle 10 ist an dieser ein Kommutator 14 angeordnet. Um diesen herum ist ein ringförmiger Bürstenhalter 16 vorgesehen, der zwei Bürstenführungen 18 trägt.

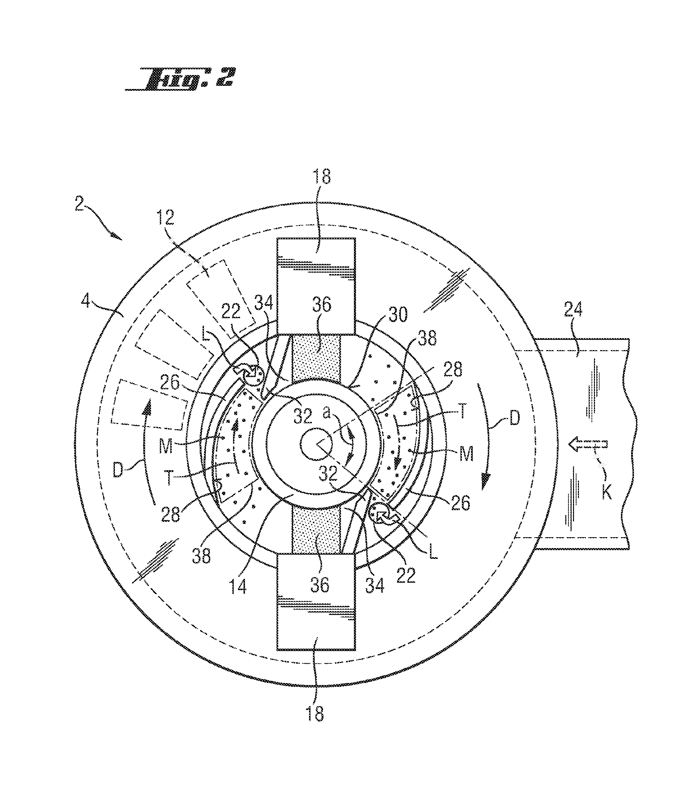

In einer dem Kommutator 14 zugewandten Gehäusewand 20 sind zwei Absaugöffnungen 22 eingelassen. Wenn beim Betrieb des Universalmotors 2 die Lüftereinrichtung 12 um eine Motorachse A rotiert wird, um einen Kühlstrom K entlang eines Kühlstrompfades 24 zu erzeugen, tritt über die Absaugöffnungen 22 Luft vom Kommutator 14 in das Motorgehäuse 4 ein, wie durch Pfeile L dargestellt. Hierbei können die Absaugöffnungen 22 selbst einen Teil des Kühlstrompfades 24 oder, wie dargestellt, mit diesem verbundene Nebenverbindungen bilden, wobei der eigentliche Kühlstrom K seitlich in das Motorgehäuse 4 eintritt (siehe Fig. 2).

Wie insbesondere aus Fig. 2 zu entnehmen ist, sind an dem Bürstenhalter ferner zwei Leitelemente 26 gehalten, die an ihrer dem Kommutator 14 zugewandten Seite eine glatte, konkave Leitfläche 28 ausbilden. Der radiale Abstand dieser Leitflächen 28 nimmt in Umfangsrichtung gegenüber einer Oberfläche 30 des Kommutators 14 in einer Drehrichtung D des Kommutators 14 ab. Dabei sind die Leitflächen in Drehrichtung D jeweils auf eine der Absaugöffnungen 22 gerichtet und erstrecken sich über einen Winkelbereich a von über 45°.

Auf einer in Umfangsrichtung von dem jeweiligen Leitelement 26 abgewandten Seite der Absaugöffnungen 22 ist jeweils ein Prallelement 32 vorgesehen, das sich von der jeweiligen Bürstenführung 18 weg zur Oberfläche 30 hin erstreckt, wobei das Prallelement 32 an seinem dem Kommutator 14 zugewandten Ende einen geringeren Abstand zur Oberfläche 30 aufweist als das Leitelement 26. Hierdurch schirmen die Prallelemente 32 einen Kommutierungsbereich 34 ab, der zwischen einer in der jeweiligen Bürstenführung 18 gehaltenen Kohlebürste 36 und der Oberfläche 30 gebildet ist.

Im Betrieb des Handwerkzeuggerätes gelangen in vielen Fällen Materialpartikel M, wie Staubpartikel von abgetragenem Material, Bürstenstaub oder grössere abgetragene Materialteilchen, in den Bereich um den Kommutator 14. Durch die Rotation des Kommutators 14 entsteht dabei an einem oberflächennahen Bereich 38 eine Tangentialströmung T in Drehrichtung D, die diese Materialpartikel M mitführt. Durch die Verringerung des Abstandes zwischen der Oberfläche 30 und der Leitfläche 28 entsteht hier ein Düseneffekt durch den die Tangentialströmung T noch verstärkt wird.

Als Folge dieser starken Tangentialströmung T werden die Mitgeführten Materialpartikel M so stark beschleunigt, dass sie aufgrund ihrer Trägheit gegen die jeweilige Leitfläche 28 gedrückt werden und entlang dieser der jeweiligen Absaugöffnung 22 zugeführt werden, auf die die Leitfläche 28 gerichtet ist. Hierbei herrscht an den Absaugöffnungen 22 in Folge der Verbindung mit dem Kühlstrompfad 24 ein Unterdruck, mittels dem die Materialpartikel M angesaugt werden und in den Kühlstrom K des Motorgehäuses 4 gelangen. Die Prallelemente 32 verhindern hierbei, dass die Materialpartikel M über die Absaugöffnungen 22 hinweg in den jeweiligen Kommutierungsbereich 34 hinein beschleunigt werden.

Die Leitelemente 26, die Absaugöffnungen 22 und die Prallelemente 32 wirken somit zusammen als Staubschutz. Dieser kann im Betrieb die in den Kommutierungsbereichen 34 vorhandenen Materialpartikel M reduzieren und dadurch deren erosive Wirkung minimieren und die Lebenszeit des Universalmotors 2 deutlich verlängern.

## Patentansprüche

1. Universalmotor (2) mit
wenigstens zwei Kohlebürsten (36), die jeweils in einem Kommutierungsbereich (34) einen Kommutator (14) kontaktieren,
einer Lüftungseinrichtung (12), mittels der ein Kühlstrom (K) in einem Kühlstrompfad (24) erzeugbar ist und
einem Staubschutz, mittels dem Materialpartikel (M) vom Kommutierungsbereich (34) beabstandbar sind und der wenigstens ein Leitelement (26) aufweist, mittels dem die Materialpartikel (M) dem Kühlstrom (K) zuleitbar sind,
**dadurch gekennzeichnet, dass** das Leitelement (26) eine zwischen zwei Kohlebürsten (36) angeordnete und dem Kommutator zugewandte glatte, konkave Leitfläche (28) aufweist, die sich benachbart zu einer Oberfläche (30) des Kommutators (14) erstreckt und zu einer Absaugöffnung (22) hin gerichtet ist, die mit dem Kühlstrompfad (24) verbunden ist.

2. Universalmotor nach Anspruch 1, **dadurch gekennzeichnet, dass** sich die Leitfläche (28) über einen Winkelbereich (a) von wenigstens 45° der Oberfläche (30) erstreckt.

3. Universalmotor nach Anspruch 1 oder 2, **dadurch gekennzeichnet, dass** sich der Abstand der Leitfläche (28) zur Oberfläche (30) in Richtung der Absaugöffnung (22) verringert.

4. Universalmotor nach einem der Ansprüche 1 bis 3, **dadurch gekennzeichnet, dass** an einer in Umfangsrichtung vom Leitelement (26) abgewandten Seite der Absaugöffnung (22) ein quer stehendes Prallelement (32) vorgesehen ist.

5. Universalmotor nach Anspruch 3, **dadurch gekennzeichnet, dass** das Prallelement (32) an einer der Absaugöffnung (22) zugewandten Seite einer Bürstenführung (18) angeordnet ist.

6. Universalmotor nach Anspruch 4 oder 5, **dadurch gekennzeichnet, dass** jeder der Kohlebürsten (36) eines der Prallelemente (32), eine der Absaugöffnungen (22) und eine der Leitflächen (28) zugeordnet ist.

7. Universalmotor nach einem der Ansprüche 4 bis 6, **dadurch gekennzeichnet, dass** das wenigstens eine Prallelement (32) an einem Bürstenhalter (16) gehalten und das wenigstens eine Leitelement (26) und die Absaugöffnung (22) an einem Motorgehäuse (4) ausgeformt sind.

8. Universalmotor nach einem der Ansprüche 4 bis 6, **dadurch gekennzeichnet, dass** das wenigstens eine Prallelement (32), das wenigstens eine Leitelement (26) und die Absaugöffnung (22) am Bürstenhalter (16) ausgeformt sind.

9. Universalmotor nach Anspruch 8, **dadurch gekennzeichnet, dass** jede der Kohlebürsten (36) an beiden Seiten in Umfangsrichtung jeweils das Prallelement (32), das Leitelement (26) und die Absaugöffnung (22) aufweist.
